Europäisches Patentamt

European Patent Office

Office européen des brevets

(19)

(11) **EP 0 419 798 B2**

(12) **NEUE EUROPÄISCHE PATENTSCHRIFT**

(45) Veröffentlichungstag und Bekanntmachung des Hinweises auf die Entscheidung über den Einspruch:
**10.09.1997 Patentblatt 1997/37**

(51) Int Cl.6: **F04D 27/00**, G01F 1/36

(45) Hinweis auf die Patenterteilung:
**08.09.1993 Patentblatt 1993/36**

(21) Anmeldenummer: **90114296.8**

(22) Anmeldetag: **26.07.1990**

(54) **Vorrichtung zur Bestimmung des Volumenstroms eines Radialventilators**

Volume flow measuring device for radial fan

Dispositif pour déterminer l'écoulement volumique d'un ventilateur radial

(84) Benannte Vertragsstaaten:
**AT BE CH DE DK ES FR GB IT LI NL SE**

(30) Priorität: **26.09.1989 DE 8911433 U**

(43) Veröffentlichungstag der Anmeldung:
**03.04.1991 Patentblatt 1991/14**

(73) Patentinhaber: **GEBHARDT VENTILATOREN GMBH & CO.**
**D-74638 Waldenburg (DE)**

(72) Erfinder: **Wieland, Heinz**
**D-7112 Waldenburg (DE)**

(74) Vertreter: **Abel, Martin, Dipl.-Ing. et al**
**Patentanwälte Dipl.-Ing. R. Magenbauer**
**Dipl.-Phys. Dr. O. Reimold**
**Dipl.-Phys. Dr. H. Vetter**
**Dipl.-Ing. M. Abel**
**Hölderlinweg 58**
**73728 Esslingen (DE)**

(56) Entgegenhaltungen:
**WO-A-89/02581** **DE-A- 2 555 673**
**DE-B- 1 628 369** **DE-C- 279 734**
**DE-C- 2 645 895**

- **Ventilatoren-Fibel der Babcock-BSH**
- **Taschenbuch der Physik, Seiten 158, 159, Verlag Harri Deutsch 1985**
- **Dubbel, Springer Verlag 1986**
- **ABC Physik, Seiten 1504 und 935 Verlag Harri Deutsch 1974**
- **Bruno Eck, Ventilatoren, Seiten 536, 537, 545 Springer Verlag 1972**

**Beschreibung**

Die Erfindung betrifft eine Vorrichtung zur Bestimmung des Volumenstromes eines Radialventilators mit mindestens einer eine Durchströmöffnung begrenzenden und dem zugehörigen Radiallaufrad vorgeordneten Einströmdüse.

Um das Leistungsvermögen von Radialventilatoren zu ermitteln, wird regelmäßig deren Ventilatorkennlinie $\Delta p = f (V)$ ermittelt.

Aus der so ermittelten Kennlinie läßt sich das Betriebsverhalten ablesen. Ferner sind Vergleiche mit anderen Ventilatoren möglich. Die Ermittlung der Kennlinie erfolgt normalerweise in Labors auf genormten Prüfständen unter Berücksichtigung genormter Auswerterichtlinien. Die hierbei zugrundeliegende Meßgenauigkeit und Reproduzierbarkeit ist sehr gut.

In vielen Fällen ist es allerdings notwendig, Leistungsmessungen bei am Betriebsort bereits installierten Ventilatoren vorzunehmen. Beispielsweise um die Qualität bereits längere Zeit im Betrieb befindlicher Ventilatoranlagen oder Geräte zu erfahren. Hier sind naturgemäß normgerechte Bedingungen, die allein eine ausreichende Meßgenauigkeit gewährleisten, fast nie vorhanden. Man weicht daher häufig auf andere, der Norm lediglich angenäherte Meßmethoden aus. Es ist verständlich, daß die dabei erzielte Meßgenauigkeit relativ gering ist und auch durch vergrößerten Meßaufwand nur unwesentlich verbessert werden kann. Dies ist z.B. auch bei der Anordnung nach WO 89/02581 der Fall, mit deren Hilfe der dynamische Druck in einiger Entfernung von dem Eintritt in die Ausströmdüse, wo das Strömungsprofil instabil ist, gemessen wird, wobei sich auch noch Einflüsse von außen ergeben, was alles nachteilige Folgen für die Meßgenauigkeit mit sich bringt Bei der Anordnung nach DE-C 279 734, die sich u.a. zur Aufgabe gestellt hat, die Fördermenge von umlaufenden Verdichtern und Pumpen zu messen, findet vor dem Einlauf in die Düse nur eine indirekte Messung statt, so daß auch bei dieser Anordnung die Meßgenauigkeit sehr zu wünschen übrig läßt.

Der Erfindung liegt deshalb die Aufgabe zugrunde, eine Vorrichtung zur Bestimmung des der Leistungsermittlung zugrundeliegenden Volumenstromes (V) eines Radialventilators zu schaffen, die einfach im Aufbau ist und mit besserer Meßgenauigkeit arbeitet, so daß auch bei bereits am Betriebsort z.B. in ein Gerät eingebautem Ventilator und in Ermangelung normalerweise notwendiger Meßstrecke, Meßergebnisse auf schnelle Art und Weise und mit hoher Genauigkeit erzielt werden können.

Diese Aufgabe wird durch die Merkmale des Patentanspruchs 1 gelöst.

Radialventilatoren besitzen normalerweise mindestens ein Ventilatorlaufrad, dem entgegen der Strömungsrichtung eines im Betrieb erzeugten Gasstromes eine Einströmdüse zur klar definierten Zuführung des zu fördernden Gases, insbesondere Luft, vorgeordnet ist. Mit der Druckmeßeinrichtung der erfindungsgemäßen Vorrichtung wird zur Bestimmung des Volumenstromes im Bereich der Einströmdüse und hierbei im Bereich deren vom Gasstrom durchquerten Durchströmöffnung an mindestens einer Stelle der vorherrschende statische Druck aufgenommen bzw. gemessen. Dieser Bereich der Einströmdüse, an dem sich die Druckmeßeinrichtung oder entsprechende Bestandteile davon befinden, sei als Meßstelle bezeichnet. Der so gemessene statische Druck an der Meßstelle kann mit dem an der Umgebung des Ventilators, insbesondere im Einbauraum des Ventilators, herrschenden statischen Druck verglichen werden. Auch andere Drücke können bei Bedarf als Bezugsdruck herangezogen werden. Die Differenz der beiden verglichenen Drücke ergibt einen sogenannten Geschwindigkeitsdruck, der sich zum Quadrat des Volumenstromes proportional verhält. Es gilt $\Delta p \sim \dot{V}^2$ bzw. k. $\Delta p = \dot{V}^2$. Der Faktor k stellt hierbei einen konstanten Faktor dar, der alle störenden Einflüsse durch Stützstreben, Lagerungen, Düsenform, Fläche der Durchströmöffnung, Dichte des geförderten Gasmediums usw. berücksichtigen kann. Er läßt sich experimentell durch Vergleich mit dem unter Laborbedingungen gemessenen Volumenstrom ermitteln, es gilt

$$k = \frac{\dot{V}^2}{\Delta p} \ .$$

Der tatsächliche Volumenstrom ergibt sich dann aus der Gleichung

$$\dot{V} = \sqrt{k \cdot \Delta p \cdot \frac{\rho 1}{\rho 2}} \ .$$

Hierbei bezeichnet $\rho$ die Luftdichte an der Meßstelle bzw. Umgebung. Gegebenenfalls kann hier eine Abschätzung vorgenommen werden.

Auf diese Weise läßt sich unter Verwendung der erfindungsgemäßen Vorrichtung über die Ermittlung der Druckdifferenz problemlos der Volumenstrom und damit das Leistungsvermögen auch eines bereits eingebauten Ventilators ermitteln. Die Vorrichtung ist von einfachem Aufbau und leicht montierbar, auch an ursprünglich nicht für solche Messungen vorgesehenen Ventilatoren.

Vorteilhafte Weiterbildung der Erfindung sind in den Unteransprüchen aufgeführt.

Gemäß einer bevorzugten Ausführungsform ist an der Meßstelle an der Einströmdüse eine Düsenwanddurchbrechung vorgesehen, die mit einem z.B. in einem Schlauch od.dgl. ausgebildeten Meßkanal mit einem Druckmesser, z.B. einem Manometer, der Druckmeßeinrichtung verbunden ist. Wenn dieser Druckmesser andererseits mit dem Umgebungsdruck beaufschlagt wird, ergibt sich ohne weiteres die gewünschte Druckdifferenz. Wegen der Druckbestimmung über die Wanddurchbrechung wird der Geschwindigkeitsanteil des im Bereich der Einströmdüse herrschenden Gesamtdruckes praktisch ausgefiltert, so daß eine äußerst exakte Messung vorliegt.

Nachfolgend wird die Erfindung anhand der beiliegenden Zeichnung näher erläutert. In dieser zeigen:

Fig. 1     einen Querschnitt durch einen mit der erfindungsgemäßen Vorrichtung ausgestatteten Radialventilator, in schematischer Darstellung, wobei es sich um einen zweiseitig saugenden Ventilator handelt,

Fig. 2     eine vergrößerte Detaildarstellung des in Fig. 1 bei 11 strichpunktiert gekennzeichneten Ventilatorbereiches an der Meßstelle und

Fig. 3     eine in Achsrichtung gesehene Vorderansicht des Ventilators aus Fig. 1 in Blickrichtung gemäß Pfeil III, die einen besonders günstigen umfangsseitigen Anordnungsbereich für eine Meßstelle zeigt.

In den Figuren ist zunächst ein Radialventilator 1 mit im Zusammenhang mit der Erfindung besonders vorteilhafter Ausgestaltung abgebildet. Er enthält außen ein Ventilatorgehäuse 2, das insbesondere als sogenanntes Spiralgehäuse 3 ausgebildet ist. In seinem Innern sind zwei zu einer Einheit zusammengefügte Radialventilator-Laufräder 5,5, angeordnet. Sie sitzen auf einer zentral angeordneten Antriebswelle 6. Selbige ist beidseits der Laufräder 5,5' an Lagern 7,7' drehgelagert. Sie sind über radial mit Bezug zur Längsachse 8 der Antriebswelle 6 und des Ventilators 1 abstehende Streben 9 gegenüber dem Ventilatorgehäuse 2 abgestützt. Zweckmäßigerweise handelt es sich um drei unter Winkelabstand von 120° sternförmig angeordnete Streben 9 pro Lager 7,7'.

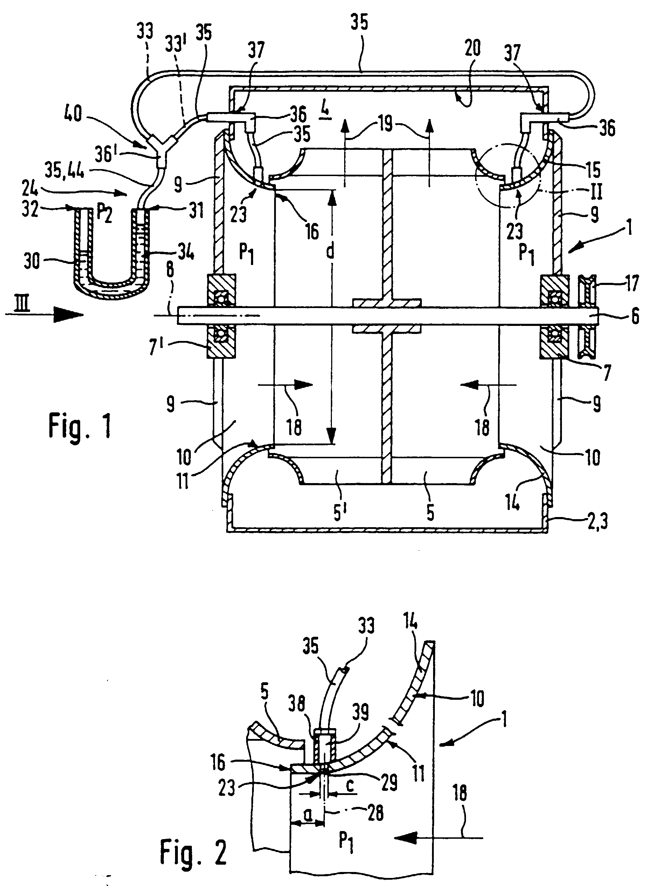

Jedem Laufrad 5,5' ist eine sogenannte Einströmdüse 10 vorgeordnet. Sie hat trichterähnliche Gestalt und schließt das Gehäuse 2 im Bereich der Lager 7,7' beidseits kragenförmig ab. Die Düsenöffnung, nachfolgend als Durchströmöffnung 11 bezeichnet, wird von der Wandung 14 der Düse umfangsseitig koaxial umgeben. Im Bereich des nach außen weisenden Düseneintritts 15 ist der Querschnitt der Durchströmöffnung 11 größer und verringert sich allmählich in Richtung zum zugeordneten Laufrad 5,5' bis zum laufradseitigen Düsenaustritt bzw. Düsenende 16. Der dort vorliegende Durchmesser der Durchströmöffnung 11 ist in Fig. 1 mit d bezeichnet.

Die Welle 6 und die drehfest mit ihr verbundenen Laufräder 5,5' sind zu einer Rotationsbewegung um die Längsachse 8 motorisch antreibbar. Beispielhaft ist bei 17 eine auf die Welle 6 aufgezogene Riemenscheibe 17 abgebildet, die mit einem nicht näher dargestellten Antriebsmotor verbindbar ist.

Im Betrieb erzeugen die rotierenden Laufräder 5,5' eine Gasströmung. Nachfolgend als Fördermedium bezeichnetes gasförmiges Medium, z.B. Luft, wird von außen durch die Einströmdüsen 10 im wesentlichen axial angesaugt (Pfeil 18), nach Durchströmen der Laufräder 5,5' im wesentlichen radial ausgestoßen (Pfeil 19), um sodann vom Innern des Ventilatorgehäuses 2 entlang eines darin ausgebildeten, hier: spiralförmigen Strömungskanals 20 zum Gehäuseaustritt 21 gefördert zu werden.

Der spiralförmige Strömungskanal 20 erstreckt sich radial außerhalb der Laufräder 5,5' um dieselben und verfügt über einen sich in dortiger Strömungsrichtung 22 zum Austritt 21 hin erweiternden Querschnitt. Die Achse der Spirale fällt zweckmäßigerweise mit der Längsachse 8 zusammen.

Anstelle des hier beschriebenen zweiseitig saugenden Ventilators kann die Erfindung natürlich auch im Zusammenhang mit einem nur einseitig saugenden Ventilator mit nur einer Einströmdüse und einem oder mehreren nachgeschalteten Laufrädern verwirklicht werden.

An dem Ventilator 1 ist zu Zwecken der Bestimmung seiner Kennlinie bzw. seiner Leistung eine Vorrichtung zur Bestimmung seines Volumenstromes vorgesehen. Mit dieser Vorrichtung läßt sich der im Bereich einer jeweiligen Einströmdüse 10 an einer nachfolgend als Meßstelle 23 bezeichneten Stelle im Bereich der Durchströmöffnung 11 herrschende Betriebsdruck $p_1$ ermitteln, messen, anzeigen oder bestimmen. Aus dem Verhältnis oder der Differenz zum in der Umgebung, am Einbauort des Ventilators, herrschenden Druck $p_2$ läßt sich das pro Zeiteinheit durch die Düse strömende Volumen, der Volumenstrom $\dot{V}$, ermitteln. Damit läßt sich dann die Ventilatorkennlinie

$$\Delta p = f(\dot{V}) \qquad (1)$$

bestimmen.

Die ermittelte Differenz p dieser beiden Drücke $p_1$, $p_2$ ergibt einen sogenannten Geschwindigkeitsdruck, der proportional dem Quadrat des Volumenstromes ist,

$$\Delta p \sim \dot{V}^2 \qquad (2)$$

$$k \cdot \Delta p = \dot{V}^2 \qquad (3)$$

Dabei berücksichtigt der Faktor k alle störenden Einflüsse durch die Streben 9, Lagerungen 7,7' und die Düsenform. Er berücksichtigt ferner die Durchtrittsfläche der Durchströmöffnung 11 sowie die Dichte des Fördermediums. Er kann experimentell durch Vergleich mit dem unter Laborbedingungen gemessenen Volumenstrom ermittelt werden als

$$k = \frac{\dot{V}^2}{\Delta p} \qquad (4).$$

Die erfindungsgemäße Vorrichtung zeichnet sich dadurch aus, daß Leistungsnachweise von Ventilatoren auch dann erbracht werden können, wenn diese bereits im Betrieb sind und in Wände, Kanäle, Geräte schon eingebaut sind. Die Kennlinie kann also unmittelbar am Einsatzort des Ventilators mit sehr hoher Meßgenauigkeit aufgenommen werden. Hat man die Druckdifferenz $\Delta p$ gemessen und eventuell die vorhandene Luftdichte abgeschätzt kann der Volumenstrom problemlos nach der Gleichung

$$\dot{V} = \sqrt{k \cdot \Delta p \cdot \frac{\rho 1}{\rho 2}} \qquad (5)$$

berechnet werden.

Die Vorrichtung kann ganz oder teilweise laufend an einem Ventilator angebracht sein, so daß man sie unter Umständen sogar zum Ventilator zählen könnte. Vorteilhaft ist jedoch, wenn sie zumindest teilweise abnehmbar ist, so daß sie nacheinander zu Messungen bei verschiedenen Ventilatoren an unterschiedlichen Einsatzorten eingesetzt werden kann.

Zur Vorrichtung gehört mindestens eine Druckmeßeinrichtung 24, die an der auch als Druckentnahmestelle bezeichenbaren Meßstelle zumindest teilweise anordenbar ist Die Meßstelle befindet sich im Bereich der Einströmdüse 10 und hierbei im Bereich der Durchströmöffnung 11.

Es ist von Vorteil, wenn sich die Meßstelle im Bereich des Innenumfanges der Einströmdüse 11 befindet. Dies ist beim Ausführungsbeispiel der Fall. Hier befindet sich ein Teil der Druckmeßeinrichtung an der betreffenden Stelle 23, bei diesem Teil oder Bestandteil handelt es sich um eine Durchbrechung 29 der Düsenwand 14 (siehe insbesondere Fig. 2). Diese Durchbrechung 29 ist vorzugsweise im Querschnitt kreisrund und kann z. B. eine Bohrung, eine Aussparung oder ein gestanztes Loch sein. Als bevorzugter Durchbrechungsdurchmesser (c) können 2 mm empfohlen werden.

Vorzugsweise sitzt die Meßstelle 23 bzw. Durchbrechung 29 in einem Bereich der Wandung 14, in dem die Eintrittsströmung 18 rechtwinkelig zur Durchbrechungsachse 28 vorbeiströmt. Auf diese Weise wird lediglich der in der Düse herrschende statische Druck erfaßt, die zugehörige Einrichtung kann man demzufolge als Statik-Druckmeßeinrichtung bezeichnen. Dies erhöht die Meßgenauigkeit, weil die von der Mediengeschwindigkeit abhängige Druckkomponente ausgeschaltet wird.

Es ist von Vorteil, wenn die Meßstelle 23 bzw. der dort befindliche Teil 29 der Druckmeßeinrichtung 24 mit in Axialrichtung der Einströmdüse 10 gemessenem Abstand a zum laufradseitigen Düsenende, d. h. zum Düsenaustritt 16, angeordnet ist (siehe Fig. 2). Ein Optimum dieses Abstandes a wird erreicht, wenn er das 0,25- bis 0,5fache des Austrittsdurchmessers d der Durchströmöffnung beträgt. Es kann von Vorteil sein, wenn die Wandung 14 im Bereich der Meßstelle 23 hohlzylindrisch konturiert ist und insbesondere einen solchen Endabschnitt der Wandung 14 darstellt. Insgesamt hat die Wandung 14 im Querschnitt gesehen, wie die Fig. 1 und 2 zeigen, vorzugsweise bogenförmige Kontur.

Die Druckmeßeinrichtung 24 enthält außerdem vorzugsweise einen Druckmesser oder Druckvergleicher 30. Er kann zweckmäßigerweise die vorherrschende Druckdifferenz $\Delta p$ messen bzw. ermitteln. Beim Ausführungsbeispiel erfolgt dies unmittelbar durch Vergleich der beiden Drücke $p_1$, $p_2$. Hier ist der Druckmesser 30 als Manometer ausgebildet z.B. als U-Rohr-Manometer. Es verfügt über zwei Druckeingangsöffnungen 31,32, die sich z.B. an den beiden Enden des U-förmigen Manometergehäuses befinden. Die eine Druckeingangsöffnung 31 steht mit einer jeweiligen Meßstelle 23 in Verbindung, während die andere Druckeingangsöffnung 32 mit der Umgebung des Ventilators kommuniziert Die an beiden Druckeingangsöffnungen 31,32 vorherrschende Druckdifferenz wird durch den Druckmesser 30 zur Anzeige gebracht. Beim Ausführungsbeispiel wird eine im Manometer enthaltene Anzeigeflüssigkeit 34 entsprechend ausgelenkt. Bei beiden Drücken $p_1$, $p_2$ handelt es sich vorzugsweise um statische Drücke.

Unter Umständen kann der Druckmesser 30 und/ oder eine zugehörige Anzeigeeinrichtung unmittelbar an der Meßstelle 23 angeordnet sein. Dann gehört der Druckmesser auch zu dem an der Meßstelle angeordneten Teil der Druckmeßeinrichtung.

Eine Erleichterung der Handhabung ergibt sich jedoch bei der beispielsgemäßen Ausführungsform.

Hier ist der Druckmesser 30 mit dem an der Meßstelle 23 angeordneten Teil der Druckmeßeinrichtung, der Durchbrechung 29, verbunden und befindet sich neben dem Ventilator. Er ist mithin gut handhabbar und ablesbar. Zur Verbindung ist ein Meßkanal 33,33' vorgesehen.

Der Meßkanal 33,33' ist zumindest teilweise im Innern eines oder mehrerer Schläuche 35 ausgebildet, die auch durch andere leitungsförmige oder rohrförmige Elemente ersetzt sein können. Die Schläuche 35 führen von der einen Druckeingangsöffnung 31 zur jeweiligen Meßstelle 23. Der besseren Verlegbarkeit wegen können anstelle eines einzigen, zur jeweiligen Meßstelle 23 führenden Schlauches 35 wie abgebildet auch mehrere, hintereinandergeschaltete Einzelschläuche vorhanden sein, die mittels Anschlußverbindungsstücken bzw. Kupplungsstücken 36 miteinander verbunden sind. Weil der Meßkanal 33,33' zur Außenseite der jeweiligen Einströmdüse 10 herangeführt wird, durchquert er teilweise das Gehäuse-Innere 4. An den Gehäusewand-Durchdringungsstellen 37 vorgesehene Kupplungsstücke 36 können ein Beschädigen einer eventuell vorhandenen Schlauchverbindung ausschließen.

Vorzugsweise weist die Druckmeßeinrichtung 24 eine im Bereich der Wanddurchbrechung 29 insbesondere an der Außenseite der Düsenwandung 14 angeordnete Hülse 38 auf. Sie ist fest an der Wand 14 angeordnet, z.B. im Rahmen einer Steck- oder Schraubverbindungseinrichtung. Auch Anschweißen oder Ankleben kommt hier in Frage. Ihre Hülsenöffnung 39 ist in axialer Verlängerung zur Durchbrechung 29 vorgesehen, beider Durchmesser können übereinstimmen. Eine koaxiale, fluchtende Ausrichtung ist hier von Vorteil.

Wegen der Hülse ergeben sich genauere Meßergebnisse, außerdem kann ein einen Meßkanal 33,33' enthaltender Schlauch od.dgl. an ihr problemlos angebracht werden. Die Hülsenöffnung 39 kommuniziert dann mit dem jeweiligen Meßkanal. An der Hülse 38 können geeignete Anschlußverbindungseinrichtungen für Schläuche, Leitungen od.dgl. vorgesehen sein, die ein insbesondere lösbares Verbinden erlauben.

Obwohl pro Einströmdüse mehrere Meßstellen 23 vorhanden sein können, reicht im Normalfall eine einzige solche aus. Handelt es sich, wie beim Ausführungsbeispiel, um einen zweiseitig saugenden Ventilator 1, dann kann jede der beiden Einströmdüsen 10 mit einer oder mehreren der beschriebenen Meßstellen und zugehörigen Druckmeßeinrichtung 24 ausgestattet sein (vgl. Fig. 1). In diesem Falle ist es allerdings zweckmäßig, nur einen einzigen Druckmesser 30 vorzusehen und zu den Meßstellen der beiden Einströmdüsen 10 führende getrennte Meßkanäle 33,33' an einer Stelle 40 vor dem Erreichen der Druckeingangsöffnung 31 zusammenzuführen. Hier kann z.B. ein Winkel-Kupplungsstück 36' hilfreich sein. Es ergibt sich so eine Art Parallelschaltung unter Bildung eines Mittelwertes für einen gemeinsamen statischen Düsendruck $p_1$. Ausgehend von der Vereinigungsstelle 40 kann die Weiterführung mit nurmehr einem einzigen Meßkanal und entsprechend einer einzigen Schlauchleitung 44 od.dgl. zur Druckeingangsöffnung 31 des Druckmessers 30 erfolgen.

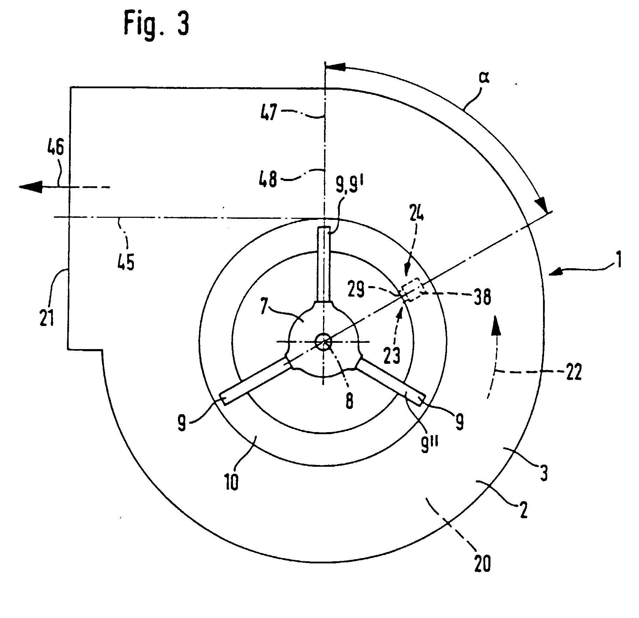

Es sind weiterhin bevorzugte Umfangsbereiche einer jeweiligen Einströmdüse 10 vorhanden, an denen die Anbringung der Meßstellen 23 bzw. der zugehörigen Teile der Druckmeßeinrichtung 24 besonders vorteilhaft ist Hierzu sei auf die Fig. 3 verwiesen.

Bei dem beispielhaft beschriebenen Ventilatortyp verläuft der Gehäuseaustritt 21 parallel zu einer Tangente 45 an die Einströmdüse 10. Mit anderen Worten, der Gehäuseaustritt 21 weist in etwa in tangentialer Richtung, so daß das Fördermedium bei entsprechender innerer Gehäusekontur ebenfalls tangential abströmt (Pfeil 46). Basierend darauf, ergibt sich für die Meßstelle 23 als bevorzugter Einbaubereich der in Fig. 3 durch $\alpha$ bezeichnete Winkelbereich. Dieser beträgt vorzugsweise zumindest in etwa 60° und wird gemessen entgegen der Spiralöffnungsrichtung 22 zumindest in etwa ausgehend von der die hier mit der Tangente 45 zusammenfallenden Längsachse des Gehäuseaustritts 21 zumindest in etwa rechtwinkelig kreuzenden, sich radial bezüglich der Düsen-Längsachse β erstreckenden Radialachse bzw. Radiallinie 47 des Ventilators. Beim Ausführungsbeispiel befinden sich Durchbrechung 29 und gegebenenfalls vorhandene Hülse 38 am Ende des Winkelbereiches, wobei der Winkel $\alpha$ genau 60° beträgt. Je nach Ausführungsform kann die Anordnung der Meßstelle auch bei geringeren Winkeln vorteilhaft sein.

Die Fig. 3 zeigt den beispielhaften Ventilator 1 in einer bevorzugten Gebrauchs- bzw. Einbaulage. Der Gehäuseaustritt 21 befindet sich hier im oberen linken Gehäusebereich und weist zur linken Seite. Bezugnehmend auf ein bei der Längsachse 8 seinen Ursprung besitzendes Koordinatensystem befindet sich der Gehäuseaustritt 21 im zweiten mathematischen Quadranten. Die Strömung 22 im Spiralgehäuse 3 erfolgt entgegen dem Uhrzeigersinn. Der sich in Umfangsrichtung erstreckende Winkelbereich $\alpha$ wird hier gemessen ausgehend von dem oberhalb der Düsen-Längsachse 8 liegenden Abschnitt 48 einer in Höhenrichtung bzw. vertikal verlaufenden und die Längsachse 8 kreuzenden Radialachse 47. Bezugnehmend auf das Koordinatensystem handelt es sich hier um den positiven Abschnitt der Ordinate. Die Winkelmeßrichtung verläuft im Uhrzeigersinn.

Wird der Ventilator 1 gegenüber dieser Position um seine Achse 8 verdreht eingebaut ergibt sich die gleiche Bemessungsregel für den Winkel bereich $\alpha$, wenn man annimmt, daß sich das Koordinatensystem mitdreht.

Wenn das maßgebliche Laufrad 5,5' eine entgegengesetzte Drehrichtung aufweist, ändert sich selbstverständlich die Betrachtungsweise. Der Gehäuseaustritt 21 verlagert sich dann in den ersten mathematischen Quadranten, die Strömungsrichtung 22 ist dann im Uhrzeigersinn gerichtet, und der Winkel a bemißt sich entgegen diesem Sinne.

Sollten sich, wie beim Ausführungsbeispiel, Stützstreben vor oder in der Durchströmöffnung 11 befinden, dann ist es zweckmäßig, die jeweilige Meßstelle 23 innerhalb des maximalen Winkelbereiches $\alpha$ - hier: 60° - winkelmittig zwischen zwei in Umfangsrichtung der Einströmdüse 10 benachbarten Streben 9' ,9" anzuordnen. Dann ergeben sich geringstmögliche Beeinflussungen der Meßgenauigkeit durch von den Streben beispielsweise hervorgerufene Turbulenzen. In Fig. 3 ist die entsprechende Anordnung gewählt, bei der sich die Meßstelle 23 bei unter 120° angeordneten Streben 9' , 9" umfangsmittig bei 60° befindet.

## Patentansprüche

1. Vorrichtung zur Bestimmung des Volumenstroms eines Radialventilators mit mindestens einer eine Durchströmöffnung begrenzenden und dem zugehörigen Radiallaufrad vorgeordneten Einströmdüse und mit einem das jeweilige Ventilatorlaufrad umgebenden Spiralgehäuse mit parallel zur Laufradachse verlaufender Spiralachse und mit etwa parallel zu einer Tangente an die Einströmdüse verlaufendem Gehäuseaustritt, dadurch gekennzeichnet, daß eine als Statik-Druckmeßeinrichtung (24) ausgebildete Meßeinrichtung zumindest teilweise (29) an einer Meßstelle (23) im Bereich des Innenumfanges der Einströmdüse (10), und zwar im Bereich von deren Durchströmöffnung (11), angeordnet ist, welche Meßstelle (23) oder ein dort befindlicher Teil (29) der Druckmeßeinrichtung (24) in einem sich über einen Winkel von 60° erstreckenden Umfangsbereich (α) der Einströmdüse (10) angeordnet ist, gemessen entgegen der Spiralöffnungsrichtung (22) zumindest in etwa ausgehend von der die Längsachse (45) des Gehäuseaustritts (21) zumindest in etwa rechtwinklig kreuzenden, sich radial bezüglich der Düsen-Längsachse (8) erstreckenden Radialachse oder -linie (47), und daß die Meßeinrichtung über eine im Bereich der Meßstelle (23) befindliche Düsenwanddurchbrechung (29) angeschlossen ist.

2. Vorrichtung nach Anspruch 1, wobei das Spiralgehäuse mit parallel zur Laufradachse verlaufender Spiralachse und mit einer Gebrauchsstellung in Richtung der Düsen-Längsachse gesehen oben links angeordnetem und nach links weisendem oder oben rechts angeordnetem und nach rechts weisendem Gehäuseaustritt versehen ist, dadurch gekennzeichnet, daß die Meßstelle (23) oder der dort befindliche Teil (29) der Druckmeßeinrichtung (24) in einem sich über einen Winkel von 60° erstreckenden Umfangsbereich (α) angeordnet ist, gemessen ausgehend von dem oberhalb der Düsen-Längsachse (8) liegenden Abschnitt (48) einer in Höhenrichtung oder vertikal verlaufenden und die Düsen-Längsachse (8) kreuzenden Radialachse oder -linie (47) und hierbei bei oben links angeordnetem Gehäuseaustritt entgegen dem und bei oben rechts angeordnetem Gehäuseaustritt in dem Uhrzeigersinn.

3. Vorrichtung nach Anspruch 1 oder 2, dadurch gekennzeichnet, daß die Druckmeßeinrichtung (24) in Gestalt einer Bohrung oder eines Loches in der Wandung (14) der Einströmdüse (10) angeschlossen ist, deren Durchmesser (c) insbesondere 2 mm beträgt.

4. Vorrichtung nach einem der Ansprüche 1 bis 3, dadurch gekennzeichnet, daß die Druckmeßeinrichtung (24) eine im Bereich der Wanddurchbrechung (29) insbesondere an der Außenseite der Düsenwandung (14) angeordnete Hülse (38) aufweist, deren Öffnung (39) an die Wanddurchbrechung (29) anschließt und zweckmäßigerweise koaxial zu dieser ausgerichtet ist.

5. Vorrichtung nach Anspruch 3 oder 4, dadurch gekennzeichnet, daß die Meßstelle (23) oder der dort befindliche Teil (29) der Druckmeßeinrichtung (24) mit insbesondere in Axialrichtung (8) der Einströmdüse (10) gemessenem Abstand (a) zum laufradseitigen Düsenende (16) angeordnet ist.

6. Vorrichtung nach einem der Ansprüche 3 bis 5, dadurch gekennzeichnet, daß der axiale Abstand (a) zumindest in etwa das 0,25-fache bis 0,5-fache des Durchmessers (d) der Durchströmöffnung (11) im Bereich des laufradseitigen Düsenendes (16) beträgt.

7. Vorrichtung nach Anspruch 1 oder 2, dadurch gekennzeichnet, daß die Meßstelle (23) oder der dort befindliche Teil (29) der Druckmeßeinrichtung (24) bei im Düsenbereich angeordneten Stützstreben (9) z.B. für Lager (7, 7') im 60°-Umfangsbereich (α) winkelmittig zwischen zwei in Umfangsrichtung der Einströmdüse (10) benachbarten Streben (9', 9'') angeordnet ist.

8. Vorrichtung nach einem der Ansprüche 1 bis 7, dadurch gekennzeichnet, daß die Druckmeßeinrichtung (24) einen Druckmesser (30) oder Druckvergleicher, insbesondere in Gestalt eines Manometers, z.B. ein U-Rohr-Manomter, aufweist, das mit dem an der Meßstelle (23) angeordneten Teil (29) der Druckmeßeinrichtung (24) verbunden ist oder diesen selbst bildet.

9. Vorrichtung nach Anspruch 8, dadurch gekennzeichnet, daß der Druckmesser (30) zwei Druckeingangsöffnungen (31, 32) aufweist, deren eine an die Ventilatorumgebung und deren andere an die Düsenmeßstelle (23) mündet.

10. Vorrichtung nach Anspruch 8 oder 9, dadurch gekennzeichnet, daß die Druckmeßeinrichtung (24) einen Meßkanal (33, 33') aufweist, der insbesondere im Innern eines Schlauches (35), einer Leitung od.dgl. ausgebildet ist und zweckmäßigerweise ein gegebenenfalls als Spiralgehäuse ausgebildetes Ventilatorgehäuse (2) zumindest teilweise durchquert, und der sich zwischen dem Bereich der Meßstelle (23) und dem Druckmesser (30) bzw. -vergleicher erstreckt, wobei er meßstellenseitig gegebenenfalls an die Wanddurchbrechung (29) oder die Hülse (38) angebracht ist.

11. Vorrichtung nach Anspruch 10, dadurch gekennzeichnet, daß der Meßkanal (33, 33') zumindest teilweise in Schlauch- oder Leitungskupplungen (36, 36') od.dgl. verläuft.

12. Vorrichtung nach einem der Ansprüche 1 bis 11, dadurch gekennzeichnet, daß mehrere Meßstellen (23) vorhanden sind, z.B. bei zwei vorhandenen Einströmdüsen mindestens eine Meßstelle (23) pro Einströmdüse (10), wobei mehrere Meßstellen (23) gegebenenfalls insbesondere mit einer gemeinsamen Druckeingangsöffnung (31) eines Druckmessers (30) oder -vergleichers verbunden sind.

**Claims**

1.  Device for the determination of the volume flow of a radial fan with at least one inlet nozzle arranged upstream of the associated radial impeller to restrict the flow orifice, and with a spiral casing enclosing the impeller and having a spiral axis extending parallel to the impeller axis and a casing exit extending approximately parallel to a tangent of the inlet nozzle, characterized in that a measuring device designed as a static pressure gauge (24) is at least in part (29) located at a measuring point (23) in the area of the internal circumference of the inlet nozzle (10), more especially in the area of the flow orifice (11) thereof, with this measuring point (23) or the part (29) of the pressure gauge (24) located there being arranged within a circumferential section (α) of the inlet nozzle (10) enclosing an angle of 60°, measured against the direction of the spiral widening (22) and at least approximately starting from the radial axis or line (47) which intersects the longitudinal axis (45) of the casing exit (21) at an at least approximately right-angle and extends radially relative to the longitudinal axis (8) of the nozzle, and that the measuring device is connected to an opening (29) in the nozzle wall in the area of the measuring point (23).

2.  Device according to claim 1, with a spiral casing having a spiral axis extending parallel to the impeller axis and a casing exit which, in an operating position viewed in the direction of the longitudinal axis of the nozzle, is located top left and points to the left, or top right and points to the right, characterized in that the measuring point (23) or the part (29) of the pressure gauge (24) located there is arranged within a circumferential section (α) of the inlet nozzle (10) enclosing an angle of 60°, measured from that section (48) of a vertical radial axis or line (47) intersecting the longitudinal axis (8) of the nozzle which lies above the longitudinal axis (8) of the nozzle, the measurement being taken anti-clockwise for a casing exit located top left and clockwise for a casing exit located top right.

3.  Device according to claim 1 or 2, characterized in that the pressure gauge is connected in the wall (14) of the inlet nozzle (10) in the form of a bore or a hole with a diameter (c) of 2 mm.

4.  Device according to any of claims 1 to 3, charac-

ized in that the pressure gauge (24) is provided with a sleeve (38) located in the area of the opening (29), in particular at the outside of the nozzle wall (14), the opening (39) of which sleeve is adjacent to the opening (29), being suitably coaxial therewith.

5.  Device according to claim 3 or 4, characterized in that the measuring point (23) or the part (29) of the pressure gauge (24) located there is arranged at a distance (a) from the nozzle end (16) nearest to the impeller which is measured in particular in the axial direction (8) of the inlet nozzle (10).

6.  Device according to any of claims 3 to 5, characterized in that the axial distance (a) is at least approximately 0.25 to 0.5 times the diameter (d) of the flow orifice (11) in the area of the nozzle end (16) nearest to the impeller.

7.  Device according to claim 1 or 2, characterized in that the measuring point (23) or the part (29) of the pressure gauge (24) located there is, if supports (9), e.g. for bearings (7, 7') are provided in the nozzle area, arranged within the 60° circumferential section (α) midway between two supports (9', 9") adjacent to each other in the circumferential direction of the inlet nozzle (10).

8.  Device according to any of claims 1 to 7, characterized in that the pressure gauge (24) has a manometer (3) or pressure comparator, in particular in the form of a U-tube manometer, which is either connected to the part (29) of the pressure gauge (24) located at the measuring point (23) or itself represents said part.

9.  Device according to claim 8, characterized in that the manometer (30) has two pressure admission points (31, 32), of which one terminates in the neighbourhood of the fan and the other at the nozzle measuring point (23).

10. Device according to claim 8 or 9, characterized in that the pressure gauge (24) has a measuring channel (33, 33') which is in particular located within a hose (35), a conduit or the like, and expediently passes at least in part through a fan housing (2) which may be designed as a spiral casing, and which extends between the area of the measuring point (23) and the manometer (30) or pressure comparator, whereby the end at the measuring point may be connected to the wall opening (29) or the sleeve (38).

11. Device according to claim 10, characterized in that the measuring channel (33, 33') passes at least in part through hose or conduit couplings (36, 36') or the like.

**12.** Device according to any of claims 1 to 11, characterized in that several measuring points (23) are provided, for instance at least one measuring point (23) per inlet nozzle (10) in assemblies with two inlet nozzles, whereby several measuring points (23) may, in particular, be connected to a common pressure admission point (31) of a manometer (30) or pressure comparator.

## Revendications

**1.** Dispositif pour déterminer le débit volumique d'un ventilateur radial comprenant au moins une tuyère d'entrée qui délimite une ouverture de passage et qui est montée en amont du rotor radial associé, et comprenant un carter en spirale qui entoure le rotor correspondant du ventilateur et qui est pourvu d'un axe de la spirale s'étendant parallèlement à l'axe du rotor et d'une sortie du carter s'étendant à peu près parallèlement à une tangente à la tuyère d'entrée, caractérisé par le fait qu'un dispositif de mesure réalisé sous la forme d'un dispositif manométrique statique (24) est disposé, du moins partiellement (29), en un endroit de mesure (23) situé dans la région du pourtour intérieur de la tuyère d'entrée (10), et ce, dans la région de l'ouverture de passage (11) de celle-ci, ledit endroit (23) de la mesure ou une partie (29) du dispositif manométrique (24) qui se trouve à cet endroit étant disposée dans un secteur ($\alpha$) du pourtour de la tuyère d'entrée (10) qui s'étend sous un angle de 60°, mesuré à l'opposé de la direction (22) d'ouverture de la spirale en partant, du moins approximativement, de l'axe ou de la ligne radiale (47) qui croise à angle droit, du moins approximativement, l'axe longitudinal (45) de la sortie (21) du carter, et qui s'étend radialement par rapport à l'axe longitudinal (8) de la tuyère, et par le fait que le dispositif de mesure est raccordé par l'intermédiaire d'une ouverture (29) qui est ménagée dans la paroi de la tuyère et qui se trouve dans la région de l'endroit (23) de la mesure.

**2.** Dispositif selon la revendication 1, dans lequel le carter en spirale est pourvu d'un axe de la spirale s'étendant parallèlement à l'axe du rotor, et d'une sortie de carter, laquelle, en position d'utilisation et vue dans la direction de l'axe longitudinal de la tuyère, est disposée en haut et à gauche en étant dirigée vers la gauche ou est disposée en haut et à droite en étant dirigée vers la droite, caractérisé par le fait que l'endroit (23) de la mesure ou la partie (29) du dispositif manométrique (24) qui se trouve à cet endroit est disposée dans un secteur ($\alpha$) du pourtour qui s'étend sous un angle de 60°, mesuré en partant de la portion (48), située au-dessus de l'axe longitudinal (8) de la tuyère, d'un axe ou d'une ligne radiale (47) qui s'étend dans la direction de la hauteur ou verticalement et qui croise l'axe longitudinal (8) de la tuyère, et mesuré dans le sens inverse des aiguilles d'une montre lorsque la sortie du carter est disposée en haut et à gauche, et dans le sens des aiguilles d'une montre lorsque la sortie du carter est disposée en haut et à droite.

**3.** Dispositif selon la revendication 1 ou 2, caractérisé par le fait que le dispositif manométrique (24) est raccordé par l'intermédiaire d'un perçage ou d'un trou qui est ménagé dans la paroi (14) de la tuyère d'entrée (10) et dont le diamètre (c) est en particulier de 2 mm.

**4.** Dispositif selon l'une des revendications 1 à 3, caractérisé par le fait que le dispositif manométrique (24) comporte un manchon (38) qui est disposé dans la région de l'ouverture (29) ménagée dans la paroi, et en particulier sur le côté extérieur de la paroi (14) de la tuyère, dont la cavité (39) se raccorde à l'ouverture (29) ménagée dans la paroi et qui est avantageusement orienté d'une manière coaxiale par rapport à celle-ci.

**5.** Dispositif selon la revendication 3 ou 4, caractérisé par le fait que l'endroit (23) de la mesure ou la partie (29) du dispositif manométrique (24) qui se trouve à cet endroit est disposée à une distance (a), mesurée en particulier dans la direction axiale (8) de la tuyère d'entrée (10), de l'extrémité (16) de la tuyère qui est située du côté du rotor.

**6.** Dispositif selon l'une des revendications 3 à 5, caractérisé par le fait que la distance axiale (a) est comprise, du moins approximativement, entre 0,25 et 0,5 fois le diamètre (d) de l'ouverture de passage (11) dans la région de l'extrémité (16) de la tuyère qui est située du côté du rotor.

**7.** Dispositif selon la revendication 1 ou 2, caractérisé par le fait que, dans le cas où des entretoises (9) sont disposées dans la région de la tuyère, par exemple pour des paliers (7, 7'), l'endroit (23) de la mesure ou la partie (29) du dispositif manométrique (24) qui se trouve à cet endroit est disposée dans le secteur périphérique à 60° ($\alpha$) au milieu de l'angle formé entre deux entretoises (9', 9") qui sont voisines dans la direction du pourtour de la tuyère d'entrée (10).

**8.** Dispositif selon l'une des revendications 1 à 7, caractérisé par le fait que le dispositif manométrique (24) comporte un manomètre (30) ou un comparateur de pression, en particulier sous la forme d'un manomètre, et par exemple d'un manomètre à tube en U, lequel est relié à la partie (29) du dispositif manométrique (24) qui est disposée à l'endroit (23) de la mesure, ou constitue lui-même cette partie.

9. Dispositif selon la revendication 8, caractérisé par le fait que le manomètre (30) comporte deux orifices d'entrée de la pression (31, 32) dont l'un débouche dans l'air environnant du ventilateur et dont l'autre débouche à l'endroit (23) de la mesure.

10. Dispositif selon la revendication 8 ou 9, caractérisé par le fait que le dispositif manométrique (24) comporte un canal de mesure (33, 33') qui est ménagé en particulier à l'intérieur d'un tuyau (35), d'un conduit ou similaire, qui traverse avantageusement, du moins partiellement, un carter de ventilateur (2) réalisé le cas échéant sous la forme d'un carter en volute et qui s'étend entre la région de l'endroit (23) de la mesure et le manomètre (30) ou le comparateur de pression, respectivement, en étant éventuellement monté, du côté de l'endroit de la mesure, sur l'ouverture (29) qui est ménagée dans la paroi ou sur le manchon (38).

11. Dispositif selon la revendication 10, caractérisé par le fait que le canal de mesure (33, 33') s'étend, du moins partiellement, dans des raccords (36, 36') de tuyaux ou de conduits ou similaires.

12. Dispositif selon l'une des revendications 1 à 11, caractérisé par le fait que sont présents plusieurs endroits de mesure (23), et par exemple au moins un endroit de mesure (23) pour chaque tuyère d'entrée (10) lorsque deux tuyères d'entrée sont présentes, cependant que, le cas échéant, plusieurs endroits de mesure (23) sont reliés en particulier à un orifice d'entrée de la pression commun (31) d'un manomètre (30) ou d'un comparateur de pression.

Fig. 1

Fig. 2

# Fig. 3